(19) Europäisches Patentamt
European Patent Office
Office européen des brevets

(11) **EP 0 506 857 B1**

(12) **EUROPEAN PATENT SPECIFICATION**

(45) Date of publication and mention
of the grant of the patent:
**01.04.1998 Bulletin 1998/14**

(21) Application number: **91902562.7**

(22) Date of filing: **18.12.1990**

(51) Int. Cl.$^6$: **B32B 7/02**, G02B 5/28,
B65D 55/02, G02B 1/04

(86) International application number:
**PCT/US90/07523**

(87) International publication number:
**WO 91/09726 (11.07.1991 Gazette 1991/15)**

(54) **TAMPER EVIDENT, TAMPER RESISTANT PACKAGING MATERIAL AND USE**

FÄLSCHUNGSSICHERES VERPACKUNGSMATERIAL, DAS EINEN FÄLSCHUNGSVERSUCH
ANZEIGT UND VERWENDUNG

MATERIAU DE CONDITIONNEMENT RESISTANT A L'ADULTERATION ET LA PROUVANT ET
UTILISATION

(84) Designated Contracting States:
**BE DE ES FR GB IT NL SE**

(30) Priority: **26.12.1989 US 456922**

(43) Date of publication of application:
**07.10.1992 Bulletin 1992/41**

(73) Proprietor:
**THE DOW CHEMICAL COMPANY
Midland, Michigan 48674 (US)**

(72) Inventors:
• **WHEATLEY, John, A.
Midland, MI 48640 (US)**
• **SCHRENK, Walter, J.
Midland, MI 48640 (US)**

(74) Representative:
**Sternagel, Hans-Günther, Dr. et al
Patentanwälte Sternagel & Fleischer
Braunsberger Feld 29
51429 Bergisch Gladbach (DE)**

(56) References cited:
**EP-A- 0 303 400        US-A- 3 247 392
US-A- 4 018 640        US-A- 4 310 584
US-A- 4 516 679        US-A- 4 721 217
US-A- 4 837 061        US-A- 4 937 134**

• **Journal of the optical Society of America Vol. 53,
pages 1266-1270 (1963), Thelen, "Multilayer
Filters With Wide Transmittance Bands".**
• **POLYMER ENGINEERING AND SCIENCE; MAY
1973, vol. 13, no. 3, pages 216-221(ALFREY, JR.),
Reflectivity of Iridescent Coextruded
Multilayered Plastic Films"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Xerox (UK) Business Services
2.15.12/3.4

**Description**

This invention relates to multilayer films that act as indicators, and more particularly to indicators providing visible evidence of strain. In one aspect, one invention relates to the use of such indicators to provide both visible evidence of tampering and a resistance to tampering with respect to articles packaged therein, whereby the indicators find use within or as a tamper evident, tamper resistant packaging material. In another aspect, the invention relates to a use wherein an article has been at least partially packaged within such a packaging material, for protecting the article by wrapping it in its entirety or in significant part with the tamper evident, tamper resistant packaging material.

Several packaging systems which purport to be tamper evident, tamper resistant, or both tamper evident and tamper resistant have been reported in the art. One packaging system said to provide visual evidence of tampering is described in United States Patent No. 4,721,217 to Phillips et al. An optically variable device is disclosed which comprises a first layer attached to a first part of the package or of a consumer article, a second layer attached to a second part of the package or article which is movable with respect to the first part, and a release layer disposed between the first and second layers of the device to permit the first and second layers to be separated. When intact, the first and second layers provide a reflection of visible color which changes according to the viewing angle. When the first and second parts are moved with respect to one another and the first and second layers separated, this optical shifting property is said to be destroyed, and cannot be restored by reassembly except as a different color shift or as a color resembling an oil slick.

One problem that is seen with the packaging material described is the requirement that consumers be able to detect the presence of a different color shift than intended by the manufacturer, or even the presence of a color shift at all.

This problem is illustrated by an example of an optically variable device provided in the patent. This device reflected a green color at normal incidence and a blue color at a 45° angle, and when tampered with reflected a grayish color in transition and a tinge of blue at an angle. Depending on the consumer, this gray to blue transition may appear to satisfy a specified green to blue transition. Moreover, that portion of the population which has blue-green color blindness may be unable to detect any color shift, as would be true of any person who insufficiently altered his or her viewing angle with respect to the device.

The present invention solves this problem by providing a multilayer optical interference film indicator comprising contiguous layers of two or more diverse thermoplastic materials of differing refractive indices. The indicator and a tamper evident packaging material made of or from the indicator are substantially colorless in an initial condition. When strained to a selected extent or greater, however, the indicator and the packaging material made therefrom will produce visible evidence of such strain in the form of iridescence or interference colors, and this visible evidence will be retained by the yield point of at least one of the materials in the packaging material having been exceeded when the visible evidence is produced. Thus, the consumer is simply asked to distinguish between the absence of all color and the unstructured or unpatterned presence of many colors in the form of iridescence or interference colors generally.

Therefore, in a first aspect, the present invention relates to a substantially colorless multilayer film according to independent claim 1.

In a second aspect, the invention relates to the use of the film as a tamper resistant packaging material in accordance with independent claim 11. In a preferred embodiment of said second aspect, the present invention relates to such a use wherein an article is at least partially packaged within the film of the present invention and the film has been joined to two portions of the article which are removable with respect to one another.

A method of protecting the contents of a container from adulteration or otherwise ensuring the integrity or authenticity of the contents is also disclosed, and includes the step of wrapping the container in its entirety or in significant part with a tamper evident, tamper resistant packaging material which includes a film (or, hereinafter an indicator) of the present invention.

Other features, advantages and uses of the multilayer film indicator of the present invention will become apparent on considering the description which follows in conjunction with the appended claims and accompanying drawings.

Fig. 1 is a cross-sectional view of a preferred embodiment of the multilayer optical interference film indicator of the present invention.

Fig. 2 is a representation of a hypothetical reflectance spectrum of an indicator of the present invention in an initial condition.

Fig. 3 is a representation of the hypothetical reflectance spectrum of Fig. 2 after the corresponding indicator of Fig. 2 has been strained beyond a selected extent.

Figures 4 and 5 are simulated, computer generated reflectance spectra for various embodiments of the present invention.

In the way of background, for multilayer optical interference films having a period of P layers, it has been previously determined that the primary reflectance of normally incident light occurs at a wavelength $\lambda_O$, wherein

$$\lambda_O = 2 \sum_{i=1}^{P} (n_i d_i) \, ,$$

and $(n_i d_i)$ is the product of the refractive index n and physical thickness d associated with a given layer. This quantity will hereafter be referred to as the "optical thickness" of that layer.

Higher orders of reflectance occur at wavelengths determined by the equation $\lambda_M = \lambda_O/M$, where M is the order of reflectance. For example, if the primary reflectance $\lambda_O$ is at 1400 nanometers, then subsequent orders of reflectance will occur at about 700 nanometers (second order), 467 nanometers (third order), 350 nanometers (fourth order), and so on.

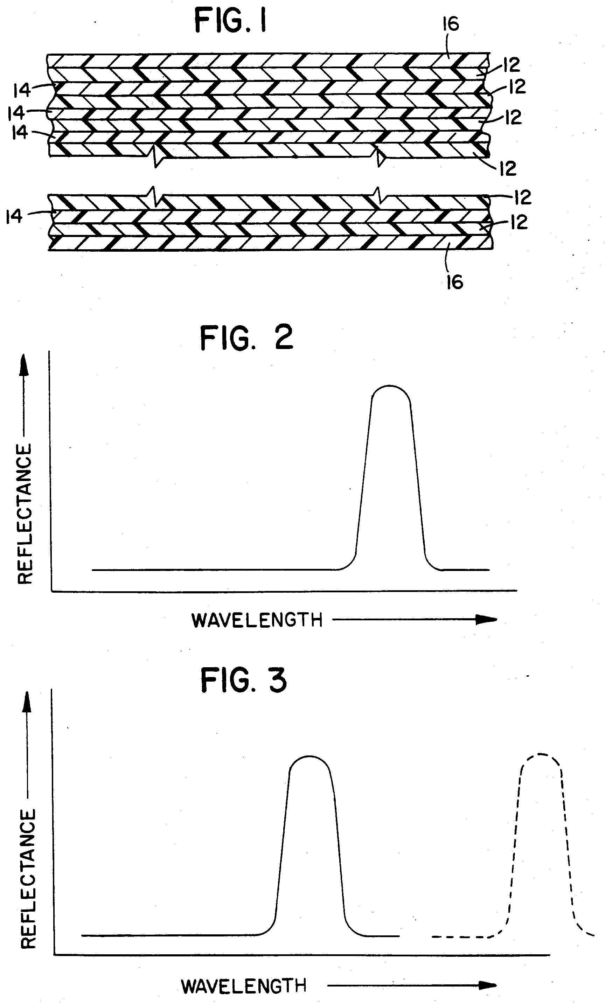

Referring now to the drawings, and more particularly to Fig. 1, a preferred multilayer film indicator 10 of the present invention is illustrated. The indicator 10 shown in Fig. 1 consists of stacked and coextensive or at least overlapping layers 12 and 14 of two diverse thermoplastic materials A and B in an ABAB-type layer order, wherein the layers 12 correspond to layers of a material A and the layers 14 to an optically diverse material B.

It should be noted that these "diverse thermoplastic materials" need not differ in any respect except in terms of refractive index. Thus, while the materials of the layers within an indicator may be chemically diverse, if these materials have the same refractive index then they are not "diverse" for purposes of the present disclosure. Similarly, the materials may be virtually identical in every other respect save refractive index, yet they are to be considered "diverse" for purposes of this disclosure.

The optically inactive outer skin layers 16 shown in Fig. 1 are primarily included and are sufficiently thick to prevent excessive break up of the thin layers 12 and 14 of A and B in processing and making the indicator 10 by the preferred multilayer coextrusion processes, there being in the indicators of the present invention preferably at least fifty stacked and coextensive or overlapping layers of the various diverse materials comprising the laminate. Multilayer coextrusion processes suitable for making indicators having at least this number of layers are taught, for example, in the commonly assigned United States Patent Nos. 3,565,985 and 3,773,882. The outer skin layers may also be present in a particular thickness for contributing to the structural properties of the indicator, however.

The film indicators of the present invention are designed such that in an initial condition the primary reflectance $\lambda_O$ of the preferred two-component film shown in Fig. 1, for example, is in the near infrared: $\lambda_O = 2(n_A d_A + n_B d_B) \cong .7 \ \mu m$ or greater, where $n_A$ and $n_B$ represent the respective refractive indices of the materials A and B, and $d_A$ and $d_B$ the respective average physical thicknesses of layers, 12 and 14 of A and B, respectively, within a period AB of the indicator 10.

To be most effective as a tamper evident and tamper resistant film, or indeed as a strong visual indicator of strain, the visual contrast between an initial condition and a condition corresponding to the presence of a degree of strain in excess of that which might be attributable to other causes such as accidental mishandling and so forth must be sufficiently great as to be easily and unequivocally perceived.

This contrast comprises the visual evidence of tampering which is basic to the present invention, and is preferably created by achieving as nearly as possible a complete absence of color in the multilayer optical interference film indicators of the present invention in an initial condition, to be contrasted with vivid interference colors or iridescence as a sign of strain against the backdrop of an indicator's environment or against a skin layer 16 which is tinted black, for example, as will be subsequently explained.

It has now been found that in the two component indicator, where a substantial majority of the layers 12 and 14 possess an optical thickness of 0.17 micrometers or greater in the initial condition and further where the ratio

$$f_A = \frac{n_A d_A}{(n_A d_A + n_B d_B)}$$

is approximately 1/2, an acceptable absence of color results for multilayer films having the layer thickness gradients in the film thickness direction and thus the reflectance band widths which are possible using the processing techniques described in United States Patent Nos. 3,565,985 and 3,773,882 and exemplified below.

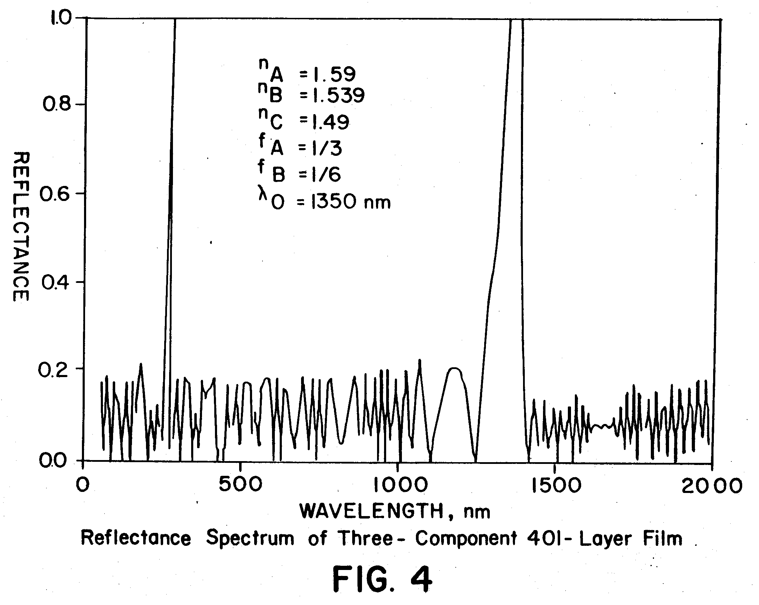

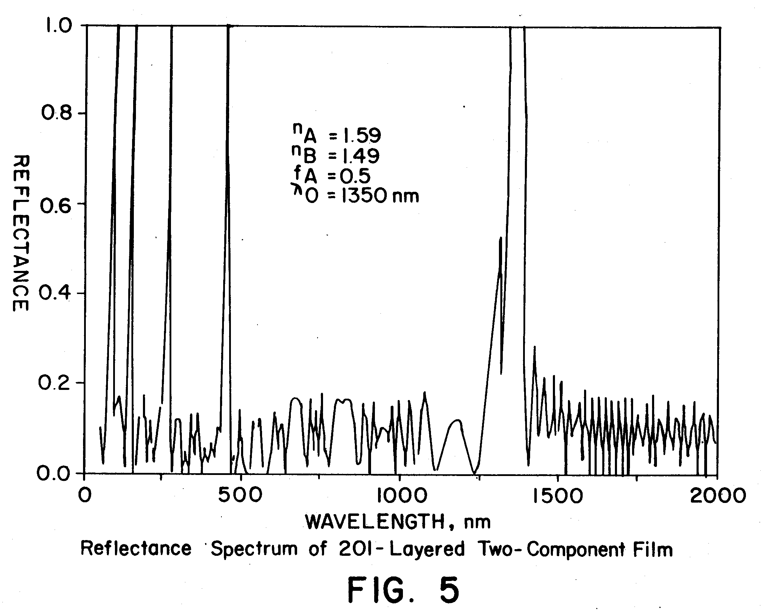

It should be observed that ordinarily it will be desirable to have some gradient in layer thickness in the film thickness direction and thus a fairly broad bandwidth for the primary reflectance of an indicator, as an indicator possessing such a bandwidth will give a more vivid indication of strain than a film indicator having a narrow primary reflectance bandwidth. Preferably, then, as respects the bandwidth of the primary reflectance peak the reflectance spectrum will have more of the character of Figures 2 and 3 than that shown in computer-generated Figures 4 and 5.

Obviously, the extent of accidental strain for which allowance must be made to avoid an unacceptable number of false-positive answers may vary according to the environment and use of the indicator, and given a primary reflectance of a particular magnitude and bandwidth, other accommodations may need to be made in the optical thicknesses of the various layers, in the layer thickness gradients produced in the thickness direction of an indicator by a given manufacturing process, and/or in the number of layers in the indicators to preserve an acceptable lack of color in these other circumstances.

While some degree of nonuniformity is thus desirable in the layer thickness direction, layer thickness nonuniformities throughout the length and width of the indicator in contrast are preferably small enough so that the indicator 10 is not colorless at one location and already showing visible color at another location. What nonuniformities are "small enough" for a given application again depends on the context and environment in which the indicator is used, but a particular example of the limits implied by this term may be found in the examples which follow.

Essentially the amount of strain which is induced in routine handling or which is otherwise accidentally induced is of concern because as the film is stretched either locally or on a larger scale, the actual physical thicknesses $d_A$ and $d_B$ of film layers A and B are reduced. In turn, as the thicknesses $d_A$ and $d_B$ grow smaller, so do the corresponding optical thicknesses and the sum of the optical thicknesses, and thus so too the wavelengths corresponding to the primary and higher order reflectances of the film.

At a selected extent of strain, the optical thicknesses of a sufficient number of layers are reduced in the indicator so that visible evidence of the strain is produced in the form of interference colors, and the yield point, of at least one of the materials A and B or of the materials in the skin layers 16 if present is exceeded. This selected extent of strain will preferably be only slightly in excess of that which might be accidentally produced, so as to give prompt visual evidence of even the most abortive attempts at tampering without the rejection of an undue percentage of unadulterated products.

Ordinarily it will also be desirable, and for tamper evident/tamper resistant packaging materials in particular, if the materials which comprise the multilayer indicators of the present invention are selected so that the evidence of strain is still visible when the film indicators rupture and break, rather than having the optical thicknesses of the various layers decline with additional tampering to an extent whereby the primary reflectance wavelength passes into the ultraviolet range. In this manner, the purchaser of an article which is wrapped or packaged in the tamper evident/tamper resistant packaging material can know an article has been tampered with if the material is still intact and evidences a signal color change, or if the material has been removed altogether.

Where the visual evidence of strain generally or of an attempt at tampering will be produced in the indicator will depend on the construction of the indicator, and on how the indicator is connected to an article as a tamper evident packaging material, for example whether the ends or edges of the indicator are attached to the article. In terms of the construction of the indicator, it may be desirable in some applications to reduce the cross-sectional area of a film indicator at regular intervals while not altering the thickness of the indicator, as by locally narrowing the width of the indicator or by perforating the indicator. These locally narrowed portions of the indicator can then be preferentially strained so that characteristic intermittent bands of interference colors or iridescence are shown in the indicator.

The shift in the reflectance profiles of the strained and unstrained film samples which corresponds to the production of the visible evidence is illustrated in Figures 2 and 3 for a hypothetical film.

The materials A and B in the two component embodiment of our invention should differ in refractive index by 0.03 or greater, and the number of stacked and coextensive or overlapping layers sufficiently great (in the area of overlap) to make the reflectance of the interference colors or iridescence unmistakable from the distances at which the indicator would likely be observed in use; since immediately adjacent layers of the various diverse materials must differ in refractive index by the same 0.03 or greater, this should preferably correspond for the uses presently contemplated for the present invention to having at least fifty layers within the indicators. Typically, a hundred or more alternating coextensive or overlapping layers of the A and B materials will be created in the two component embodiment of the present invention. The use of this number of layers, in addition to lending emphasis to the signal color change produced on achieving a degree of strain, is advantageous also in that it makes counterfeiting the indicators very difficult if not impossible.

In order for the color change to be effective evidence of strain generally or of an attempt at tampering in the more particular case of our tamper evident/tamper resistant films, the skin layers 16 at the least should not interfere with the perception of this change. Accordingly, at least one of the skin layers 16 adjacent a first surface 18 of the indicator 10 should be transparent to visible light.

Where the background provided by the environment of the indicator 10 presents an adequate contrast to enable the color change to be reliably perceived by an observer thereof, both skin layers 16 may be transparent. Where an adequate contrast is not thus presented, however, the second skin layer 16 may be pigmented as suggested earlier to provide the contrast necessary to have the signal color change recognized.

Where processing equipment and techniques permit and an adequate percentage of layers can be said to have an initial optical thickness to allow the indicators to be substantially colorless absent an attempt at tampering, the skin layers 16 may be omitted altogether. Because of the very small physical thicknesses of the hundred or more layers which have thus far been used in developing the present tamper evident/tamper resistant packaging materials, however, it has been thought necessary to employ skin layers in actual practice which comprise from 5 to 10 percent by volume of the indicators of the present invention at least, although as noted earlier it may be desirable for structural rather than optical purposes to have thicker skin layers also.

The two component embodiment which has thus far been primarily particularly described is generally considered satisfactory for purposes of the present invention, but even where the second order reflection has been suppressed (by the selection of optical thicknesses so that $f_A$ is approximately 1/2), third, fourth and higher order reflections may exist which would give the appearance of color to some observers in the initial condition or after accidental mishandling and the like. Accordingly, a three component system has been developed which enables the suppression of not only the second order reflection but in a particularly preferred embodiment also the third and fourth order reflections.

In this three component system, the multilayer film indicator consists of at least one period ABCB of stacked and coextensive or overlapping layers of three diverse thermoplastic materials A, B and C wherein A possesses a higher refractive index, $n_A$, B an intermediate refractive index $n_B$, and C a lesser refractive index $n_C$. The optical thicknesses and refractive indices of the various layers are preferably selected so that:

$$f_A = \frac{n_A d_A}{(n_A d_A + n_B d_B + n_C d_C + n_B d_B)} \cong 1/3;$$

$$f_B = \frac{n_B d_B}{(n_A d_A + n_B d_B + n_C d_C + n_B d_B)} \cong 1/6;$$

$$f_C = \frac{n_C d_C}{(n_A d_A + n_B d_B + n_C d_C + n_B d_B)} \cong 1/3; \text{ and}$$

$$n_B \cong \sqrt{n_A n_C}.$$

To start out again with a primary initial reflectance at a wavelength of at least 700 nanometers, preferably at least a substantial majority of the layers A, B and C should have an optical thickness of 0.09 micrometers or greater throughout the thickness of the indicator when the indicator is in the initial condition. The optical thicknesses of the layers may be adjusted, as before, where considerations of handling strains and the like require.

And, again as before, preferably the materials A, B and C will be selected so that the highest and lowest refractive indices of layers within a period of P layers will differ by .03 or greater, with a sufficient number of coextensive or overlapping layers to make the signal color change produced, on achieving a selected extent of strain readily detectable. Again as before, the refractive indices of adjacent layers of materials within a period of P layers will differ by 0.03 or greater. Preferably, the indicators of the present invention in this regard will comprise at least fifty layers, and most preferably, at least one hundred layers.

The two and three component embodiments which have been described in detail above are preferred because the two band three component embodiments of specified f-ratios provide a multilayer film indicator which has the least amount of higher order reflectance in the visible wavelengths that is presently deemed achievable. This results generally in greater control over the reflectance of the films, and permits the initial reflectance to be designed for a higher wavelength without higher order reflections bringing color to the films.

The greater separation between the wavelength corresponding to the primary reflectance in an initial condition and the upper end of the visible range provides a processing window for making the multilayer film indicators of the present invention which is generally desirable. Also, one may not know precisely how much "innocent" or accidental strain might be encountered by the indicators of the present invention in a given application, so that a safety factor could be built into the devices, if desired, to prevent excessive false-positive readings without an excessive loss in detection capabilities.

This is not to suggest, however, that other f-ratios and arrangements, employing any number of thermoplastic materials with different refractive indices, might not also exist which would function adequately in making the indicators of the present invention initially substantially colorless, particularly in a given environment or use. In this regard, a number of other arrangements and materials have been reported in the dielectric vacuum deposition or sputtering art which might be suitable, see for example United States Patent No. 3,247,392 to Thelen.

With regard to achieving and preserving evidence of strain, the multilayer film indicators may in summary be constructed in a number of ways. One possible configuration would place at least one material whose yield point is at least equalled when the evidence is produced within the core layers of a multilayer film indicator having skin layers.

Another configuration would encapsulate core layers comprised of elastomeric materials within skin layers whose yield point would be at least equalled when the color change occurs, thus preventing the elastomeric inner or core layers from returning to an unstretched or unstrained condition. This configuration is exemplified below in Example 1.

As noted earlier, the film indicators of the present invention may not employ skin layers at all. If skin layers are employed, one or both are transparent. However constructed, the multilayer film indicators of the present invention are well adapted for a number of uses, and are particularly well suited for a tamper evident, tamper resistant packaging material.

When used in or as a tamper evident, tamper resistant packaging material, the multilayer film indicators of the present invention may preferably be heat-shrinkable and used as a shrink band joined to two portions of an article which are movable with respect to one another, such as the neck and screw cap of a prescription bottle. Alternatively, the films may be used in the form of a membrane seal across an opening in a container. Or, the films may be used to overwrap an article entirely. It may also be desirable to employ the films of the present invention in two or all three of these capacities to improve the tamper evidence or tamper resistance properties of an article packaged therein.

The multilayer film indicators of the present invention may be further illustrated by the examples which follow.

Example 1

In this example a multilayer film indicator including 197 alternating layers of Pebax® 2533 SA00 polyether amide (Atochem Company, Paris, France) with a refractive index of 1.49, and of Pellethane® 2355-95 AEF polyurethane produced by The Dow Chemical Company, Midland, Michigan, and having a refractive index of 1.56, was made by multilayer coextrusion according to the processes and using equipment and techniques such as described in commonly-assigned United States Patents No. 3,759,647, 3,773,882, and 3,884,606. These 197 layers were encapsulated within skin layers of transparent and unpigmented Profax® 6131 polypropylene (Hercules, Inc.) by coextrusion therewith, with each of the cap or skin layers comprising approximately 10 percent of the total 0.002 inch thickness of the film. A one inch wide strip of this multilayer film was wrapped around the neck and screw cap of a bottle, and a hot air gun was used to cause the film to shrink to fit tightly around the neck and cap. Unscrewing of the cap caused the film to reflect vivid colors of red, green, yellow and blue. Further twisting of the cap caused the film to rupture. The cap could be rotated less than approximately 15° until the color change appeared and approximately 45° before the film ruptured.

Example 2

This example simulated the reflectance spectrum of a multilayer film indicator consisting of layers of three diverse thermoplastic materials A, B and C in an ABCBA layer order as an ABCB repeating unit, with layers of the A material being immediately adjacent opposing outer surfaces of the indicator. The A, B and C materials selected for the simulation were a polystyrene of a refractive index of 1.59, a styrene-methylmethacrylate copolymer with a refractive index of 1.539, and a polymethylmethacrylate of a refractive index of 1.49. These materials were chosen to satisfy the relationship $n_B \cong \sqrt{n_A n_C}$ . The optical thicknesses of materials within a series of such layers were chosen so that:

$$f_A = \frac{n_A d_A}{(n_A d_A + n_B d_B + n_C d_C + n_B d_B)} \cong 1/3;$$

$$f_B = \frac{n_B d_B}{(n_A d_A + n_B d_B + n_C d_C + n_B d_B)} \cong 1/6;$$

$$f_C = \frac{n_C d_C}{(n_A d_A + n_B d_B + n_C d_C + n_B d_B)} \cong 1/3; \text{ and}$$

$$\lambda_O = 2(n_A d_A + n_B d_B + n_C d_C + n_B d_B) = 1.35 \ \mu m.$$

Using the materials and relationships set forth above a reflectance spectrum was simulated for this three component multilayer film indicator having ABCB repeating units, according to a program developed using a MATHCAD 2.0 software package from Mathsoft. Inc., Cambridge, Mass., and run on an IBM AT personal computer with a 640K base memory and a 1 MB expanded memory.

The computer programmer relied on the matrix method discussed extensively in A. Vasicek, "Optics of Thin Films", North Holland Publishing Co., Amsterdam (1960), and used the equations developed therein and in H. A. MacLeod, "Thin-Film Optical Filters", Adam Hilger, London (1969), and in M. Born and E. Wolf, "Principles of Optics", Pergamon Press (1965). The refractive indices of the A, B and C materials were supplied to the model, as was the number of repeating ABCB series or periods of the film to be modeled. The angle of incidence of incoming light, the various optical thickness ratios $f_A$, $f_B$ and $f_C$, the wavelength corresponding to a desired primary reflectance, and the wavelength range for simulation were also supplied.

Fig. 4 shows the above-mentioned simulated reflectance spectrum constructed by this method with the polystyrene, styrene-methylmethacrylate and polymethylmethacrylate system, and confirms that a selection of the f-ratios and refractive indices for a three component indicator which are set forth above will suppress the second, third and fourth orders of reflection and result in an indicator which in an initial condition is substantially colorless.

The same model also simulated the reflectance spectra of two component film indicators constructed as in Example 1 to confirm the general accuracy of the model's simulated spectra by comparison to those seen in actual practice. The simulated spectra corresponded well with those seen in actual practice and show a suppression of the second order reflection where $f_A$ is approximately equal to 0.5, see Fig. 5.

Examples 1 and 2 demonstrate that the two and three component multilayer film indicators which have been described herein as preferred are suitable for accomplishing the purposes and realizing the advantages of the present invention.

PS.: To convert from: inch to: m, multiply by: 2.54 x $10^{-2}$.

## Claims

1. A substantially colorless multilayer film comprising two or more contiguous layers of diverse thermoplastic materials, and which is capable of producing iridescence or interference colors when strained to the extent that the yield point of at least one of the diverse materials has been at least equalled, wherein the refractive index corresponding to a layer of one of the thermoplastic materials differs from the refractive indices of immediately adjacent layers by 0.03 or greater, and wherein either

   ( i) the film consists of at least one period AB of layers of two diverse thermoplastic materials A and B and having average layer thicknesses $d_A$ and $d_B$ , respectively, wherein A possesses a refractive index $n_A$ and B a refractive index $n_B$, and wherein:
   the ratio

   $$f_A = \frac{n_A d_A}{(n_A d_A + n_B d_B)}$$

   is approximately 1/2, or
   (ii) the film consists of at least one series ABCB of layers of three diverse thermoplastic materials A, B and C having average layer thicknesses $d_A$, $d_B$ and $d_C$, respectively, wherein A possesses a higher refractive index $n_A$, B an intermediate refractive index $n_B$, and C a lesser refractive index $n_C$ , and wherein:
   the ratio

   $$f_A = \frac{n_A d_A}{(n_A d_A + n_B d_B + n_C d_C + n_B d_B)}$$

   has a value of approximately 1/3: the ratio

   $$f_B = \frac{n_B d_B}{(n_A d_A + n_B d_B + n_C d_C + n_B d_B)}$$

   has a value of approximately 1/6;
   the ratio

   $$f_C = \frac{n_C d_C}{(n_A d_A + n_B d_B + n_C d_C + n_B d_B)}$$

   has a value of approximately 1/3, and

   $$n_B \cong \sqrt{n_A n_C}$$

2. The film of claim 1, wherein the two or more contiguous layers of diverse thermoplastic materials are encapsulated within opposing outer skin layers, wherein the skin layers adjacent at least a first side of the composite film are transparent to visible light.

3. The film of claim 1, wherein a substantial majority of said layers of two diverse thermoplastic materials A and B have an optical thickness of 0.17 µm or greater.

4. The film of claim 1, wherein a substantial majority of the layers of three diverse thermoplastic materials A, B and C have an optical thickness of 0.09 µm or greater.

5. The film of any of claims 1-3, wherein the film consists of at least one series AB of layers of polyurethane of a refractive index $n_A$ of 1.56 and of a polyether amide of a refractive index $n_B$ of 1.49.

6. The film of any of claims 1, 2 and 4, wherein the film consists of at least one series ABCB of layers of polystyrene of refractive index $n_A$ of 1.59, styrene-methylmethacrylate copolymer of refractive index $n_B$ of 1.54 and a polymethylmethacrylate of refractive index $n_C$ of 1.49.

7. The film of any of the preceding claims, wherein the cross-sectional area of the film is reduced at one or more locations.

8. The film of claim 7, wherein the film is perforated at said one or more locations.

9. The film of any of the preceding claims 2-8, wherein core layers comprised of elastomeric materials are encapsulated within skin layers of materials whose yield point would be at least equalled when the yield point of at least one of the diverse core layer materials has been equalled.

10. The film of any of the preceding claims, wherein the film is heat-shrinkable.

11. The use of the film of any of claims 1-10 as tamper resistant packaging material.

12. The use of claim 11 as a membrane seal across an opening in a container.

13. The use of claim 11 wherein an article is at least partially packaged within the film and the film is joined to two portions of the article which are removable with respect to one another.

**Patentansprüche**

1. Im wesentlichen farbloser mehrschichtiger Film, enthaltend zwei oder mehrere aneinandergrenzende Schichten von verschiedenen thermoplastischen Materialien, der in der Lage ist, bunt schillernde oder Interferenzfarben zu bilden, wenn er in einem solchen Maße verformt wird, daß der Fließpunkt mindestens eines der verschiedenen Materialien mindestens erreicht wurde, wobei der Brechungsindex, der einer Schicht einer der thermoplastischen Materialien entspricht, sich von den Brechungsindizes der unmittelbar benachbarten Schichten um 0,03 oder mehr unterscheidet und wobei entweder

(i) der Film aus mindestens einer Folge AB von Schichten aus zwei unterschiedlichen thermoplastischen Materialien A und B besteht und mittlere Schichtdicken $d_A$ bzw. $d_B$ aufweist, wobei A einen Brechungsindex $n_A$ und B einen Brechungsindex $n_B$ aufweisen und wobei das Verhältnis

$$f_A = \frac{n_A d_A}{(n_A d_A + n_B d_B)}$$

etwa ½ ist,
oder
(ii) der Film aus mindestens einer Folge ABCB von Schichten aus drei unterschiedlichen thermoplastischen Materialien A, B und C besteht und mittlere Schichtdicken $d_A$, $d_B$ bzw. $d_C$ aufweist, wobei A einen höheren Brechungsindex $n_A$, B einen mittleren Brechungsindex $n_B$ und C einen kleineren Brechungsindex $n_C$ aufweisen und wobei
das Verhältnis

8

$$f_A = \frac{n_A d_A}{(n_A d_A + n_B d_B + n_C d_C + n_B d_B)}$$

einen Wert von etwa 1/3 aufweist;
das Verhältnis

$$f_B = \frac{n_B d_B}{(n_A d_A + n_B d_B + n_C d_C + n_B d_B)}$$

einen Wert von etwa 1/6 aufweist;
das Verhältnis

$$f_C = \frac{n_C d_C}{(n_A d_A + n_B d_B + n_C d_C + n_B d_B)}$$

einen Wert von etwa 1/3 aufweist und

$$n_B \cong \sqrt{n_A} \, n_C$$

2. Film nach Anspruch 1, dadurch gekennzeichnet, daß die zwei oder mehreren aneinandergrenzenden Schichten aus unterschiedlichen thermoplastischen Materialien zwischen einander gegenüberliegenden äußeren Deckschichten eingeschlossen sind, wobei die Deckschichten neben mindestens einer ersten Seite des Verbundfilmes für sichtbares Licht durchlässig sind.

3. Film nach Anspruch 1, dadurch gekennzeichnet, daß eine wesentliche Mehrheit der Schichten aus zwei unterschiedlichen thermoplastischen Materialien A und B eine optische Dicke von 0,17 µm oder mehr aufweist.

4. Film nach Anspruch 1, dadurch gekennzeichnet, daß eine wesentliche Mehrheit der Schichten aus drei unterschiedlichen thermoplastischen Materialien A, B und C eine optische Dicke von 0,09 µm oder mehr aufweist.

5. Film nach einem der Ansprüche 1-3, dadurch gekennzeichnet, daß der Film aus mindestens einer Folge AB von Schichten aus Polyurethan mit einem Brechungsindex $n_A$ von 1,56 und aus einem Polyetheramid mit einem Brechungsindex $n_B$ von 1,49 besteht.

6. Film nach einem der Ansprüche 1, 2 und 4, dadurch gekennzeichnet, daß der Film aus mindestens einer Folge ABCB von Schichten aus Polystyrol mit einem Brechungsindex $n_A$ von 1,59, Styrol-Methylmethacrylatcopolymer mit einem Brechungsindex $n_B$ von 1,54 und einem Polymethylmethacrylat mit einem Brechungsindex $n_C$ von 1,49 besteht.

7. Film nach einem der vorstehenden Ansprüche, dadurch gekennzeichnet, daß die Querschnittsfläche des Films an einer oder mehreren Stellen verringert ist.

8. Film nach Anspruch 7, dadurch gekennzeichnet, daß der Film an einer oder mehreren dieser Stellen perforiert ist.

9. Film nach einem der vorstehenden Ansprüche 2-8, dadurch gekennzeichnet, daß Kernschichten aus elastomeren Materialien zwischen Deckschichten eingeschlossen sind aus Materialien, deren Fließpunkt mindestens erreicht wird, wenn der Fließpunkt von mindestens einer der unterschiedlichen Kernschichtmaterialien erreicht wurde.

10. Film nach einem der vorstehenden Ansprüche, dadurch gekennzeichnet, daß er durch Wärme schrumpfbar ist.

11. Verwendung des Films nach einem der Ansprüche 1-10 als fälschungssicheres Verpackungsmaterial.

12. Verwendung nach Anspruch 11 als Membransiegel über einer Behälteröffnung.

13. Verwendung nach Anspruch 11, dadurch gekennzeichnet, daß ein Artikel zumindest teilweise in dem Film eingepackt ist und der Film mit zwei voneinander lösbaren Teilen des Artikels verbunden ist.

**Revendications**

1. Film multicouche essentiellement incolore qui comprend deux ou plusieurs couches contiguës de matériaux thermoplastiques différents et qui est capable de produire des couleurs d'iridescence ou d'interférence lorsqu'il est déformé au point que la limite élastique d'au moins un desdits matériaux différents ait été au moins atteinte, dans lequel l'indice de réfraction correspondant à une couche de l'un desdits matériaux thermoplastiques diffère des indices de réfraction des couches immédiatement adjacentes de 0,03 ou plus et dans lequel soit

   (i) le film est composé d'au moins une période AB de couches de deux matériaux thermoplastiques différents A et B ayant respectivement des épaisseurs de couche moyenne $d_A$ et $d_B$, dans lequel A possède un indice de réfraction $n_A$ et B un indice de réfraction $n_B$, et dans lequel: le rapport

   $$f_A = \frac{n_A d_A}{(n_A d_A + n_B d_B}$$

   vaut approximativement 1/2,
   soit
   (ii) le film est composé d'au moins une série ABCB de couches de trois matériaux thermoplastiques différents A, B et C ayant respectivement des épaisseurs de couche moyennes $d_A$, $d_B$ et $d_C$, dans lequel A possède un indice de réfraction supérieur $n_A$, B un indice de réfraction intermédiaire $n_B$ et C un indice de réfraction inférieur $n_C$, et dans lequel:
   le rapport

   $$f_A = \frac{n_A d_A}{(n_A d_A + n_B d_B + n_C d_C + n_B d_B)}$$

   vaut environ 1/3;
   le rapport

   $$f_B = \frac{n_B d_B}{(n_A d_A + n_B d_B + n_C d_C + n_B d_B)}$$

   vaut environ 1/6; le rapport

   $$f_C = \frac{n_C d_C}{(n_A d_A + n_B d_B + n_C d_C + n_B d_B)}$$

   vaut environ 1/3;
   et

   $$n_B \cong \sqrt{n_A n_C}$$

2. Film selon la revendication 1, dans lequel les deux ou plusieurs couches contiguës de matériaux thermoplastiques différents sont encapsulées dans des couches de peau externes opposées, dans lequel les couches de peau adjacentes au moins à une première face du film composite sont transparentes à la lumière visible.

3. Film selon la revendication 1, dans lequel une importante majorité desdites couches de deux matériaux thermoplastiques différents A et B possède une épaisseur optique de 0,17 $\mu$m ou plus.

4. Film selon la revendication 1, dans lequel une importante majorité des couches de trois matériaux thermoplastiques différents A, B et C possède une épaisseur optique de 0,09 $\mu$m ou plus.

5. Film selon l'une des revendications 1 à 3, dans lequel le film est composé d'au moins une série AB de couches de polyuréthanne d'un indice de réfraction $n_A$ de 1,56 et d'un polyéther-amide d'un indice de réfraction $n_B$ de 1,49.

**6.** Film selon l'une des revendications 1, 2 et 4, dans lequel le film se compose d'au moins une série ABCB de couches de polystyrène d'indice de réfraction $n_A$ de 1,59, de copolymère styrène/méthacrylate d'indice de réfraction $n_B$ de 1,54 et de poly(méthacrylate de méthyle) d'indice de réfraction $n_C$ de 1,49.

**7.** Film selon l'une des revendications précédentes, dans lequel la surface de section du film est réduite au niveau d'un ou plusieurs endroits.

**8.** Film selon la revendication 7, dans lequel le film est perforé auxdits un ou plusieurs endroits.

**9.** Film selon l'une des revendications précédentes 2 à 8, dans lequel le film des couches centrales constituées de matériaux élastomères sont encapsulées dans des couches de peau de matériaux dont la limite élastique serait au moins atteinte lorsque la limite élastique d'au moins un des matériaux différents des couches centrales a été atteinte.

**10.** Film selon l'une des revendications précédentes, dans lequel le film est thermorétractable.

**11.** Utilisation du film selon l'une des revendications 1 à 10 en tant que matériau de conditionnement résistant à l'altération.

**12.** Utilisation selon la revendication 11 en tant que membrane de scellage recouvrant l'ouverture dans un récipient.

**13.** Utilisation selon la revendication 11 dans laquelle un article est au moins partiellement conditionné dans le film et le film est relié à deux portions de l'article qui sont amovibles l'une par rapport à l'autre.

# FIG. 1

# FIG. 2

REFLECTANCE

WAVELENGTH

# FIG. 3

REFLECTANCE

WAVELENGTH

Reflectance Spectrum of Three-Component 401-Layer Film

## FIG. 4

$n_A = 1.59$
$n_B = 1.49$
$f_A = 0.5$
$\lambda_O = 1350$ nm

REFLECTANCE

WAVELENGTH, nm

Reflectance Spectrum of 201-Layered Two-Component Film

FIG. 5